# NEW EUROPEAN PATENT SPECIFICATION

(11) **EP 2 877 957 B2**
(45) Date of publication and mention of the opposition decision: **09.03.2022**
(45) Mention of the grant of the patent: 15.05.2019
(21) Application number: 13739694.1
(22) Date of filing: 19.07.2013
(51) Int. Cl.: G06F 21/79, H04L 9/00, G06F 21/75, G06F 21/77, G06F 12/14, G06F 12/08, G06F 21/55

(54) **METHOD AND DEVICE FOR PROTECTING AGAINST FAULT ATTACK(S) IN AN ELECTRONIC DEVICE USING A CACHE MEMORY**
VERFAHREN UND VORRICHTUNG ZUM SCHUTZ VOR FEHLERANGRIFFEN IN EINEM ELEKTRONISCHEN GERÄT MIT CACHE-SPEICHER
MÉTHODE ET DISPOSITIF DE PROTECTION CONTRE LES ATTAQUES PAR FAUTE D'UN DISPOSITIF ÉLECTRONIQUE COMPRENANT UNE MÉMOIRE CACHE

(30) Priority: 27.07.2012 EP 12305919
(43) Date of publication of application: 03.06.2015
(73) Proprietor: Thales Dis France SAS, 92190 Meudon (FR)
(72) Inventor: GAUTERON, Laurent, F-13705 La Ciotat (FR); VILLEGAS, Karine, F-13705 La Ciotat (FR)
(74) Representative: Thomas, Christine Marie Catherine
(86) International application number: PCT/EP2013/065311
(87) International publication number: WO 2014/016218

(56) References cited:
- WO-A1-2009/138892
- US-A1- 2003 204 696
- US-B1- 6 247 151
- HAGAI BAR-EL ET AL: "The Sorcerer's Apprentice Guide to Fault Attacks", INTERNET CITATION, 7 May 2004 (2004-05-07), XP002329915, Retrieved from the Internet: URL:http://web.archive.org/web/20041016071 838/eprint.iacr.org/2004/100 [retrieved on 2005-05-27]

## Description

### Technical field

The present invention relates to devices or products comprising hardware and software capable of executing a sensitive process using a cache memory, and needing to be resistant to fault attacks.

### Background of the invention

A fault attack is a type of physical attack that consists in submitting a device to unusual environmental conditions to modify the execution of a sensitive process (for instance by introducing a value discrepancy) and then deduce sensitive information from its alter behaviour or results and/or to modify the attacked sensitive process. For instance, the aim of a fault attack may be determination of a secret or a ciphering/deciphering or cryptographic key or modification of a value to get additional rights (such as access or credits).

As it is known by the man skilled in the art, an efficient way for detecting fault attacks during a sensitive process consists in introducing redundancies into the code. For example, document WO 2009/138892 A1 proposes to implement a redundancy check in order to detect a perturbation while reading data. A document "Countermeasures against fault attacks on software implemented AES: Effectiveness and cost" (WESS' 10 Proceedings of the 5th Workshop on Embedded Systems Security · October2010 · Article No.: 7 · Pages 1-10) proposes per-line cache invalidation to avoid storing faulty data in the cache.

For instance code redundancy may consist in reading a value, that is stored into a memory of an electronic device at different instants separated by a chosen time interval, and then in considering that this electronic device has been subject to a fault attack when these read values differ therebetween.

Unfortunately, such a code redundancy does not allow detecting fault attacks that occur when the external memory value is written into a cache memory. Indeed, if an attacker succeeds to introduce a discrepancy into the sensitive process, for instance by replacing the external memory value with a faulty value during its writing into the cache memory, every reading will be performed into the cache memory and will return the faulty value it stores. The same cache memory value being returned at each reading, it is not possible to detect that it is a faulty value resulting from a fault attack.

### Summary of the invention

So, an objective of the invention is to improve fault attack detections into electronic devices comprising hardware and software capable of executing a sensitive process using a cache memory.

More precisely, the invention provides a method for protecting against fault attack(s) an electronic device comprising hardware and software capable of executing a sensitive process using a cache memory and implementing redundancy checks, said method comprising at least a step (i) during which said cache memory is filled with a first value originating from an external memory, a step (ii) during which said first value is read into said cache memory and a step (iii) implementing at least a redundancy check, characterized in that it further comprises a fundamental step to guarantee that any redundant reading inside the redundancy check will extract a value from cache memory which is numerically equal to the genuine value in the external memory.

The fundamental step of the invention implies that none redundancy check is processed if a risk exists that the value stored in the cache memory is wrong. It enables to insure that redundancy checks are not based on a corrupted value. This increases the efficiency of the fault attack detection by eliminating the risk to make redundancy checks based on a wrong value as it previously occurs.

According to the invention, the method implementing hardware integrity checks, wherein the value stored in the cache memory is compared with the value stored into the external memory, the fundamental step introduces, between a reading and its redundancy, a delay of a chosen duration longer than the duration between two integrity checks.

The invention consists in waiting a next integrity check of the sensitive code before introducing a redundancy. It ensures that an integrity check is always performed by the hardware before the execution of the redundancy.

Thus, if the integrity check fails and thus if a corruption of the value in cache memory is detected, a security action is triggered. If the integrity check does not fail, a redundancy check is further performed by software.

Thus, in case where the first value is not detected as corrupted during integrity check, the value in cache memory is read for redundancy check, to detect if the electronic device is subject to a fault attack.

In case where a redundancy check fails, a security action may be triggered. Redundancy check may be periodically or randomly implemented.

The invention also provides a protection device, intended for equipping an electronic device comprising hardware and software capable of executing a sensitive process using a cache memory, and arranged for implementing redundancy checks, for filing said cache memory with a first value originating from an external memory, for reading said first value into said cache memory, characterized in that it is arranged for guaranteeing that any redundant reading inside the redundancy check will extract a value from cache memory which is numerically equal to the genuine value in the external memory.

According to the invention, the protection device is arranged for implementing hardware integrity checks, wherein the integrity of the value stored in the cache memory is checked, for introducing, between a reading and its redundancy, a delay of a chosen duration longer than the duration between two integrity checks.

The invention also provides an electronic device comprising hardware and software capable of executing a sensitive process using a cache memory and a control device such as the one above introduced.

This electronic device may be chosen from a group comprising at least a smart card, a memory card reader, a communication device, and a portable memory means.

### Brief description of the figure

Other features and advantages of the invention will become apparent on examining the detailed specifications hereafter and the appended drawings, wherein:
- figure 1 schematically and functionally illustrates an example of electronic device with a protection device according to the invention,
- figure 2 schematically illustrates a first example of algorithm including the steps of a first embodiment of a protection method according to the invention, and
- figure 3 schematically illustrates a second example of algorithm including the steps of a second embodiment of a protection method according to the invention.

### Detailed description of the preferred embodiment

The appended drawings may serve not only to complete the invention, but also to contribute to its definition, if need be.

The invention aims, notably, at offering a protection method, and an associated protection device PD, intended for protecting an electronic device ED from fault attack(s) of attacker(s).

The invention concerns any electronic device ED comprising hardware and software capable of executing a sensitive process SP using a cache memory CM, notably for security redundancy.

In the following description, it will be considered that the electronic device ED is a smart card. For instance, it may be a credit card or an electronic identity card or else an electronic passport. But the invention is not limited to this type of electronic device. It concerns a lot of secured devices, and notably memory card readers, communication devices (for instance smart phones or electronic tablets or else Set-Top Boxes, Machine To Machine), and portable memory means (for instance USB keys). For instance, the sensitive process may be an electronic transaction or an user / mutual authentication or else an exchange of secret data (obtained by means of a ciphering or cryptographic algorithm).

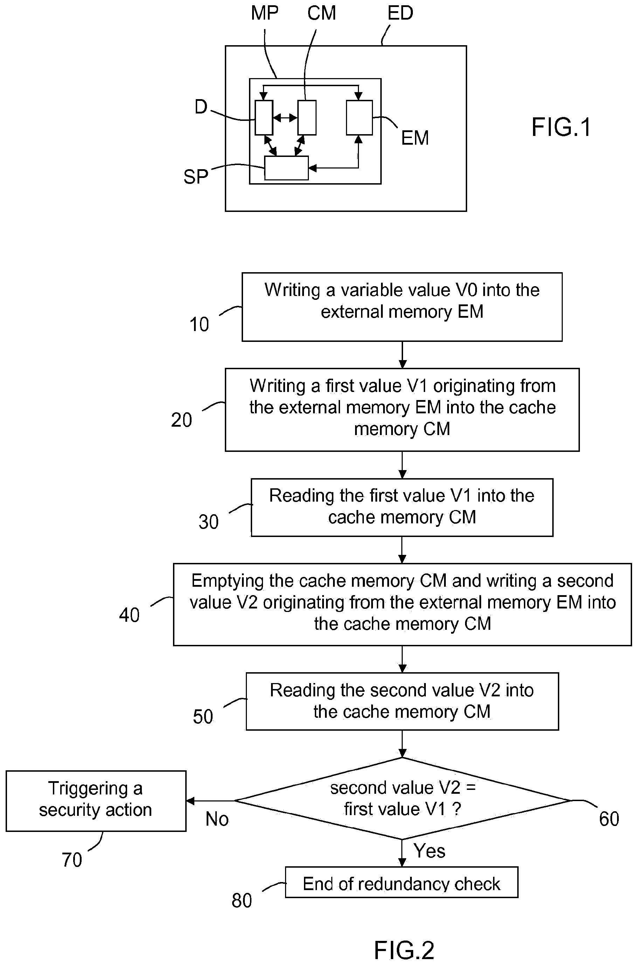

In the example illustrated in figure 1 the electronic device ED comprises a microprocessor (or microcontroller) MP, which comprises hardware and software capable of executing a sensitive process SP using a cache memory CM, and a protection device PD according to the invention coupled to this sensitive process SP in order to protect it against fault attack(s) of attacker(s).

It is important to note that the protection device PD is not mandatorily located into the microprocessor MP (or any equivalent means, such as integrated circuits, for instance). Indeed, it may be a device that is coupled to the microprocessor MP and may access to the sensitive process SP that is running in it. Such a device PD may be also located into another device of the electronic device ED.

So a protection device PD can be made of software modules, at least partly, or of electronic circuit(s) or hardware modules, or else of a combination of hardware and software modules. In case where it is made of software modules it can be stored in a memory means or in any computer software product which can be read by an electronic device.

As mentioned before, the invention proposes a protection method based on redundancy checks and comprising three main steps (i), (ii) and (iii).

Such a method may be implemented, at least partly, by a protection device PD associated to an electronic device ED. Moreover, such a method may be periodically or randomly implemented, for instance.

A first step (i) of this protection method comprises a phase during which the cache memory CM of the electronic device ED is filled at a chosen address with a first value V1 originating from an external memory EM. This first filling may be carried out by the sensitive process running into the microprocessor MP of the electronic device ED or by the protection device D. This first value V1 is supposed to be a copy of a variable value V0 that is stored into the external memory EM. Such a variable value may be, for instance, representative of an action, such as a PIN verification, or of a status, or of the current value of a counter, or of a transaction amount, or else a part of a secret key.

It is important to note that this first step (i) may be preceded by a preliminary step or may comprise a preliminary phase during which the external memory EM is filled with the variable value V0.

In the example illustrated in figure 1 the external memory EM is defined into the microprocessor MP. But this is not mandatory. Indeed, the external memory EM could be located into another electronic device capable of establishing communications with the electronic device ED.

During the first filling of the cache memory CM, the electronic device ED may be subject to a fault attack intended to introduce a discrepancy by replacing the variable value V0 (stored into the external memory EM and to be stored into the cache memory CM) with a faulty value.

A second step (ii) of the protection method comprises a phase during which the first value is read into the chosen address of the cache memory CM by the protection device D.

A third step (iii) of the protection method is a redundancy test. It is such that it further comprises a fundamental step to guarantee that any redundant reading inside the redundancy check will extract a value from cache memory which is numerically equal to the genuine value in the external memory.

At least two different embodiments of the third step (iii) may be envisaged.

A first one of these embodiments is comprised in the first example of algorithm illustrated in figure 2. This first embodiment described below is excluded from the scope of the invention.

As illustrated this first algorithm starts with a sub step 10 during which the external memory EM is filled with a variable value V0 representative of an action.

Then follows a sub step 20 during which a first value V1 originating from the external memory EM (and supposed to be the variable value V0) is written into a dedicated address of the cache memory CM of the electronic device ED.

The first step (i) of the protection method comprises the sub step 20 and possibly the sub step 10.

Then the first algorithm comprises a sub step 30 during which the first value V1 is read into the dedicated address of the cache memory CM. The second step (ii) of the protection method comprises this sub step 30. The reading of the value V1 may serve in a calculation that will be redundantly performed later.

Then the first algorithm comprises a sub step 40 during which the cache memory CM is emptied (or voided) at the above mentioned dedicated address, and then this cache memory CM is filled again into the same dedicated address with a second value V2 originating from the external memory EM (and supposed to be the variable value V0).

In this embodiment of the third step (iii), to ensure that the value in cache memory (CM) is equal to the genuine one, the first value V1 stored in cache memory is systematically regarded as different from the value V0 stored into the external memory EM. It is thus deleted. In other words, one considers that there is always a difference between V1 and V0 without carrying out any comparison between V1 and V0. So, the cache memory CM is systematically emptied (or voided) after the first value V1 has been read into the cache memory CM. This implies a new filling of the cache memory with a value read in the external memory and thus corrected if ever the first copying was attacked. The redundant reading will thus extract a genuine value from the cache memory.

In a variant, before emptying the cache memory CM, the first value V1 could be first compared with the variable value V0, preferably through hardware operations.

Then the first algorithm comprises a sub step 50 during which the second value V2 is read into the dedicated address of the cache memory CM.

Then the first algorithm may follow with a sub step 60 during which the second value V2 is compared with the first value V1 or a redundant calculation is performed using the value V2 stored in the cache memory CM and the result is compared to a same previously performed calculation.

If V2 ≠ V1 or the results of the calculations are not identical, the first algorithm comprises a sub step 70 during which a security action is triggered because it is considered that the electronic device ED has been subject to a fault attack. So no other sensitive action may be carried out with the electronic device ED.

If V2 = V1, the first algorithm comprises a sub step 80 during which the redundancy check (and therefore the protection method) comes to an end because it is considered that the electronic device ED has not yet been subject to a fault attack. So other sensitive actions, such as a transaction or an user authentication, may be possibly carried out with the electronic device ED.

In this first example, the third step (iii) of the protection method comprises the sub steps 40 to 80.

The above mentioned first embodiment and the variant thereof are excluded from the scope of the invention.

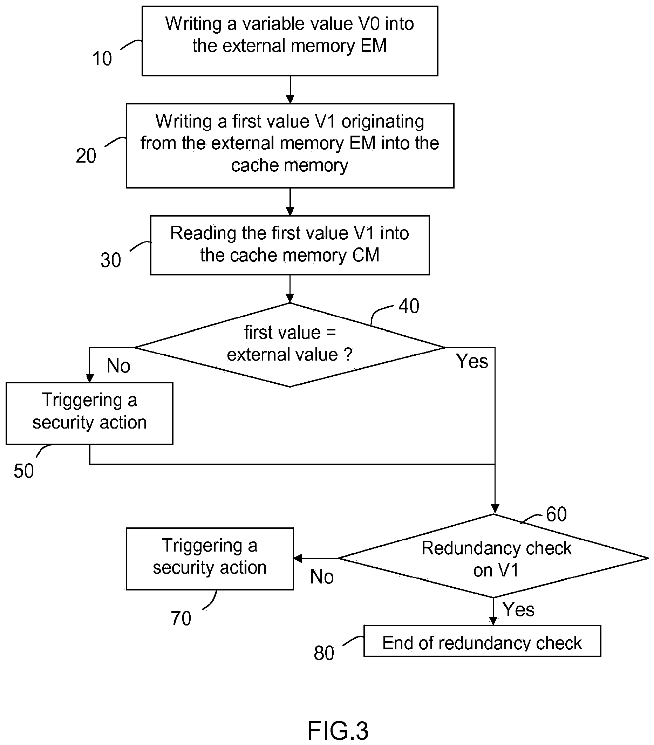

A second embodiment is comprised in the second example of algorithm illustrated in figure 3. This second embodiment is in accordance with the invention.

As illustrated this second algorithm starts with a sub step 10 during which the external memory EM is filled with a variable value V0 representative of an action.

Then it comprises a sub step 20 during which a first value V1 originating from the external memory EM (and supposed to be the variable value V0) is written into a dedicated address of the cache memory CM of the electronic device ED.

The first step (i) of the protection method comprises the sub step 20 and possibly the sub step 10.

Then the second algorithm comprises a sub step 30 during which the first value V1 is read into the dedicated address of the cache memory CM. The second step (ii) of the protection method comprises this sub step 30.

Then the second algorithm comprises a sub step 40 during which the integrity of the first value V1 is checked. This check is like and indirect comparison with the variable value V0 (stored into the external memory EM). This integrity check occurs during a time interval having a chosen duration. It is typically an hardware implemented integrity check. This chosen duration may be equal to N clock cycles of the microprocessor MP (for instance N = 300). So, during this time interval one could either only proceeds to the cache integrity check and therefore waits for its result or executes some noisy process to make difficult reverse engineering of this process.

If V1 ≠ V0 at the end of the time interval, the second algorithm may follow with a sub step 50 during which a security action is triggered because it is considered that the electronic device ED has been subject to a fault attack.

If V1 = V0 at the end of the time interval, the second algorithm may follow with a sub step 60 where a redundancy check is performed using the value V1 stored in the cache memory CM.

The value is thus not refreshed. Nevertheless the genuineness of the value V1 is guaranteed by the previously implemented integrity check.

The redundancy check is thus classically performed through a comparison with the value previously read in the cache memory CM or through a comparison of the result of a redundant calculation using the value read in cache memory CM.

If redundancy check fails, the second algorithm comprises a sub step 70 during which a security action is triggered because it is considered that the electronic device ED has been subject to a fault attack. So no other sensitive action may be carried out with the electronic device ED.

If the redundancy succeeds, the second algorithm comprises a sub step 80 during which the cache check (and therefore the protection method) comes to an end because it is considered that the electronic device ED has not yet been subject to a fault attack. So other sensitive actions, such as a transaction or an user authentication, may be possibly carried out with the electronic device ED.

In this second example, the third step (iii) of the protection method comprises the sub steps 40 to 80.

The invention offers a low cost solution to by-pass a hardware cache mechanism that induces incontrollable and weak data manipulation/storage regarding fault attack.

The invention is not limited to the embodiments of protection method, protection device and electronic device described above, only as examples, but it encompasses all alternative embodiments which may be considered by one skilled in the art within the scope of the claims hereafter.

## Claims

1. Method for protecting against fault attack(s) an electronic device (ED) comprising hardware and software capable of executing a sensitive process (SP) using a cache memory (CM) and implementing redundancy checks, said method comprising at least a step (i) during which said cache memory (CM) is filled with a first value originating from an external memory (EM), a step (ii) during which said first value is read into said cache memory (CM) and a step (iii) implementing at least a redundancy check, **characterized in that** it further comprises a fundamental step to guarantee that any redundant reading inside the redundancy check will extract a value from cache memory (CM) which is numerically equal to the genuine value in the external memory (EM), said fundamental step being such that the device implements hardware integrity checks wherein the integrity of the value stored in the cache memory is checked, said fundamental step introducing, between a reading and and its redundancy, a delay of a chosen duration longer than the duration between two integrity checks.

2. Method according to claim 1, **characterized in that**, in case where said first value is not detected as corrupted during integrity check, the value in cache memory (CM) is read for redundancy check.

3. Method according to one of claims 1 to 2, **characterized in that**, in case where a redundancy check fails, a security action is triggered.

4. Method according to one of claims 1 to 3, **characterized in that** redundancy checks are periodically implemented.

5. Method according to one of claims 1 to 3, **characterized in that** redundancy checks are randomly implemented.

6. Protection device (D) for an electronic device (ED) comprising hardware and software capable of executing a sensitive process (SP) using a cache memory (CM), said protection device (D) being arranged for implementing redundancy checks, for filing said cache memory (CM) with a first value originating from an external memory (EM), for reading said first value into said cache memory (CM), **characterized in that** it is arranged for guaranteeing that any redundant reading inside the redundancy check will extract a value from cache memory (CM) which is numerically equal to the genuine value in the external memory (EM), said protection device being arranged for implementing hardware integrity checks, wherein the integrity of the value stored in the cache memory is checked, and for introducing, between a reading and its redundancy, a delay of a chosen duration longer than the duration between two integrity checks.

7. Electronic device (ED) comprising hardware and software capable of executing a sensitive process (SP) using a cache memory (CM), **characterized in that** it further comprises a protection device (D) according to claim 6.

8. Electronic device according to claim 7, **characterized in that** it is chosen from a group comprising at least a smart card, a memory card reader, a communication device, and a portable memory means. s

## Patentansprüche

1. Verfahren zum Schützen vor (einem) Fehlerangriff(en) einer elektronischen Vorrichtung (ED), umfassend Hardware und Software, die in der Lage ist, einen sensiblen Prozess (SP) unter Verwendung eines Cache-Speichers (CM) auszuführen und Redundanzprüfungen zu implementieren, das Verfahren umfassend mindestens einen Schritt (i), während dessen der Cache-Speicher (CM) mit einem ersten Wert gefüllt wird, der von einem externen Speicher (EM) stammt, einen Schritt (ii), während dessen der erste Wert in den Cache-Speicher (CM) gelesen wird, und einen Schritt (iii), der mindestens eine Redundanzprüfung implementiert, **dadurch gekennzeichnet, dass** es ferner einen grundlegenden Schritt umfasst, um sicherzustellen, dass ein redundantes Lesen innerhalb der Redundanzprüfung einen Wert aus dem Cache-Speicher (CM) extrahiert, der numerisch dem wahren Wert im externen Speicher (EM) entspricht, wobei der grundlegende Schritt derart ist, dass die Vorrichtung Hardwareintegritätsprüfungen implementiert, wobei die Integrität des im Cache-Speicher gespeicherten Werts überprüft wird, wobei der grundlegende Schritt zwischen einem Lesen und und seiner Redundanz eine Verzögerung einer ausgewählten Dauer, die länger als die Dauer zwischen zwei Integritätsprüfungen ist, einführt.

2. Verfahren nach Anspruch 1, **dadurch gekennzeichnet, dass,** im Fall, dass der erste Wert während der Integritätsprüfung nicht als beschädigt erkannt wird, der Wert im Cache-Speicher (CM) zur Redundanzprüfung gelesen wird.

3. Verfahren nach einem der Ansprüche 1 bis 2, **dadurch gekennzeichnet, dass,** im Fall, dass eine Redundanzprüfung fehlschlägt, eine Sicherheitsaktion ausgelöst wird.

4. Verfahren nach einem der Ansprüche 1 bis 3, **dadurch gekennzeichnet, dass** Redundanzprüfungen periodisch implementiert werden.

5. Verfahren nach einem der Ansprüche 1 bis 3, **dadurch gekennzeichnet, dass** Redundanzprüfungen zufällig implementiert werden.

6. Schutzvorrichtung (D) für eine elektronische Vorrichtung (ED), umfassend Hardware und Software, die in der Lage ist, einen sensiblen Prozess (SP) unter Verwendung eines Cache-Speichers (CM) auszuführen, wobei die Schutzvorrichtung (D) zum Implementieren von Redundanzprüfungen, zum Füllen des Cache-Speichers (CM) mit einem ersten Wert, der von einem externen Speicher (EM) stammt, zum Lesen des ersten Werts in den Cache-Speicher (CM) angeordnet ist, **dadurch gekennzeichnet, dass** sie angeordnet ist, um sicherzustellen, dass ein redundantes Lesen innerhalb der Redundanzprüfung einen Wert aus dem Cache-Speicher (CM) extrahiert, der numerisch dem wahren Wert im externen Speicher (EM) entspricht, wobei die Schutzvorrichtung angeordnet ist zum Implementieren von Hardwareintegritätsprüfungen, wobei die Integrität des im Cache-Speicher gespeicherten Werts überprüft wird, und zum Einführen, zwischen einem Lesen und seiner Redundanz, einer Verzögerung einer ausgewählten Dauer, die länger als die Dauer zwischen zwei Integritätsprüfungen ist.

7. Elektronische Vorrichtung (ED), umfassend Hardware und Software, die in der Lage ist, einen sensiblen Prozess (SP) unter Verwendung eines Cache-Speichers (CM) auszuführen, **dadurch gekennzeichnet, dass** sie ferner eine Schutzvorrichtung (D) nach Anspruch 6 umfasst.

8. Elektronische Vorrichtung nach Anspruch 7, **dadurch gekennzeichnet, dass** sie ausgewählt ist aus einer Gruppe, umfassend mindestens eine Smartcard, einen Speicherkartenleser, eine Kommunikationsvorrichtung und ein tragbares Speichermittel. s

## Revendications

1. Procédé de protection vis-à-vis d'une ou des attaque(s) en injection d'un dispositif électronique (ED) comprenant un matériel et un logiciel capables d'exécuter un processus sensible (SP) en utilisant une mémoire cache (CM) et en implémentant des vérifications de redondance, ledit procédé comprenant au moins une étape (i) pendant laquelle ladite mémoire cache (CM) est remplie avec une première valeur provenant d'une mémoire externe (EM), une étape (ii) pendant laquelle ladite première valeur est lue dans ladite mémoire cache (CM) et une étape (iii) implémentant au moins une vérification de redondance, **caractérisé en ce qu'**il comprend en outre une étape fondamentale pour garantir que n'importe quelle lecture redondante à l'intérieur de la vérification de redondance extraira une valeur de la mémoire cache (CM) qui est numériquement égale à la valeur authentique dans la mémoire externe (EM), ladite étape fondamentale étant telle que le dispositif implémente des vérifications d'intégrité de matériel dans lequel l'intégrité de la valeur stockée dans la mémoire cache est vérifiée, ladite étape fondamentale introduisant, entre une lecture et et sa redondance, un délai d'une durée choisie plus longue que la durée entre deux vérifications d'intégrité.

2. Procédé selon la revendication 1, **caractérisé en ce que,** dans un cas où ladite première valeur n'est pas détectée comme étant corrompue pendant une vérification d'intégrité, la valeur en mémoire cache (CM) est lue pour une vérification de redondance.

3. Procédé selon l'une des revendications 1 à 2, **caractérisé en ce que,** dans un cas où une vérification de redondance échoue, une action de sécurité est déclenchée.

4. Procédé selon l'une des revendications 1 à 3, **caractérisé en ce que** des vérifications de redondance sont implémentées périodiquement.

5. Procédé selon l'une des revendications 1 à 3, **caractérisé en ce que** des vérifications de redondance sont implémentées de manière aléatoire.

6. Dispositif de protection (D) pour un dispositif électronique (ED) comprenant un matériel et un logiciel capables d'exécuter un processus sensible (SP) en utilisant une mémoire cache (CM), ledit dispositif de protection (D) étant agencé pour implémenter des vérifications de redondance, pour remplir ladite mémoire cache (CM) avec une première valeur provenant d'une mémoire externe (EM), pour lire ladite première valeur dans ladite mémoire cache (CM), **caractérisé en ce qu'**il est agencé pour garantir que n'importe quelle lecture redondante à l'intérieur de la vérification de redondance extraira une valeur de la mémoire cache (CM) qui est numériquement égale à la valeur authentique dans la mémoire externe (EM), ledit dispositif de protection étant agencé pour implémenter des vérifications d'intégrité de matériel, dans lequel l'intégrité de la valeur stockée dans la mémoire cache est vérifiée, et pour introduire, entre une lecture et sa redondance, un délai d'une durée choisie plus longue que la durée entre deux vérifications d'intégrité.

7. Dispositif électronique (ED) comprenant un matériel et un logiciel capables d'exécuter un processus sensible (SP) en utilisant une mémoire cache (CM), **caractérisé en ce qu'**il comprend en outre un dispositif de protection (D) selon la revendication 6.

8. Dispositif électronique selon la revendication 7, **caractérisé en ce qu'**il est choisi parmi un groupe comprenant au moins une carte à puce, un lecteur de carte mémoire, un dispositif de communication, et un moyen de mémoire portable.s
